Europäisches Patentamt

European Patent Office

Office européen des brevets

(11) Numéro de publication: **0 027 396**
**A1**

## (12) DEMANDE DE BREVET EUROPEEN

(21) Numéro de dépôt: **80401336.5**

(22) Date de dépôt: **19.09.80**

(51) Int. Cl.³: **B 01 D 11/02**
**C 13 D 1/10**

(30) Priorité: **04.10.79 FR 7924674**

(43) Date de publication de la demande:
**22.04.81 Bulletin 81/16**

(84) Etats Contractants Désignés:
**AT BE DE GB IT NL**

(71) Demandeur: **FIVES-CAIL BABCOCK, Société anonyme
7,rue Montalivet
F-75383 Paris Cedex 08(FR)**

(72) Inventeur: **Longuet, André
171, rue Faidherbe
F-62400 Bethune(FR)**

(74) Mandataire: **Fontanié, Etienne
FIVES-CAIL BABCOCK 7, rue Montalivet
F-75383 Paris Cedex 08(FR)**

(54) Appareil d'échange thermique ou massique entre matières solides et liquide.

(57) Un tambour (10) a axe horizontal ou légèrement incliné comportant intérieurement une hélice (12) fixée à la paroi du tambour et assurant la progression des matières solides, des dispositifs de relevage et d'égouttage divisant le couloir formé par l'hélice en une série de compartiments, et formant avec les spires de l'hélice (12) et la paroi du tambour (10) des chambres recevant le liquide s'égouttant des matières solides, et des couloirs (26) faisant communiquer chacune de ces chambres avec le compartiment situé en amont, en considérant le sens de progression des matières solides.

Les dits couloirs (26) sont aménagés le long de la paroi du tambour (10) et chacun d'eux communique avec le compartiment qu'il alimente par des ouvertures (30) percées dans sa partie arrière, en considérant le sens de rotation du tambour, et par des orifices percés dans la partie avant, attenante à la cloison (16) du dispositif de relevage et d'égouttage, d'un épi creux (28) raccordé à la partie avant du couloir et disposé approximativement dans le plan médian, transversal à l'axe du tambour, du compartiment.

FIG. 1

- 1 -

## Appareil d'échange thermique ou massique entre matières solides et liquide

La présente invention a pour objet un appareil d'échange thermique ou massique entre des matières solides et un liquide, constitué par un tambour à axe horizontal ou légèrement incliné comportant intérieurement une hélice fixée à la paroi du tambour et assurant la progression des matières solides, des dispositifs de relevage et d'égouttage divisant le couloir formé par l'hélice en une série de compartiments, chaque dispositif d'égouttage comportant une grille qui, au cours de la rotation du tambour, soulève les matières solides pour permettre leur égouttage puis les laisse retomber dans le compartiment suivant et une cloison pleine située à l'arrière de la grille, en considérant le sens de rotation du tambour, et formant avec les spires de l'hélice et la paroi du tambour une chambre recevant le liquide d'égouttage, et des couloirs faisant communiquer chacune de ces chambres avec un compartiment situé en amont, en considérant le sens de progression des matières solides.

Le but de l'invention est d'améliorer les échanges entre les matières solides et le liquide en assurant un égouttage plus complet des matières solides et une meilleure répartition du liquide dans la masse des matières solides égouttées.

Conformément à l'invention, les couloirs sont aménagés le long de la paroi du tambour et chacun d'eux communique avec le compartiment qu'il alimente par des ouvertures percées dans sa partie arrière, en considérant le sens de rotation du tambour, et par des orifices percés dans la partie avant, attenante à la cloison du dispositif de relevage et d'égouttage, d'un épi creux raccordé à la partie avant du couloir et disposé approximativement dans le plan médian, transversal à l'axe du tambour, du compartiment.

Les couloirs s'étendent sur toute la largeur axiale du compartiment qu'ils alimentent et leur largeur, mesurée le long de la paroi du tambour, est pratiquement égale à la dimension correspondante des chambres auxquelles ils sont raccordés.

Suivant un mode de réalisation préféré, les dispositifs de relevage et d'égouttage sont décalés d'un angle supérieur à 360° et chaque couloir partant de l'extrémité aval, en considérant le sens de progression des matières solides, d'un compartiment, traverse l'extrémité amont de ce même compartiment et aboutit à l'extrémité amont du compartiment précédent.

Chaque dispositif de relevage et d'égouttage comporte une grille en deux parties formant entre elles un angle obtus, l'une des parties étant fixée au bord intérieur de la cloison pleine et l'autre partie étant raccordée à une grille courbe disposée le long de la paroi du tambour, à faible distance de celle-ci, et deux parois latérales perforées disposées le long des spires de l'hélice, à faible distance de celles-ci, et dont les bords sont fixés aux dites grilles pour former un panier d'égouttage de grande capacité.

Pour augmenter la surface d'égouttage, il est avantageux de prévoir dans la partie inférieure du panier d'égouttage une cloison creuse à parois perforées, disposée transversalement à l'axe du tambour et approximativement dans le plan médian du panier, l'intérieur de cette cloison communiquant avec la chambre de collecte du liquide d'égouttage.

D'autres caractéristiques de l'invention apparaîtront à la lecture de la description qui suit et se réfère aux dessins l'accompagnant qui montrent, à titre d'exemple non limitatif, un mode de réalisation de l'invention et sur lesquels :

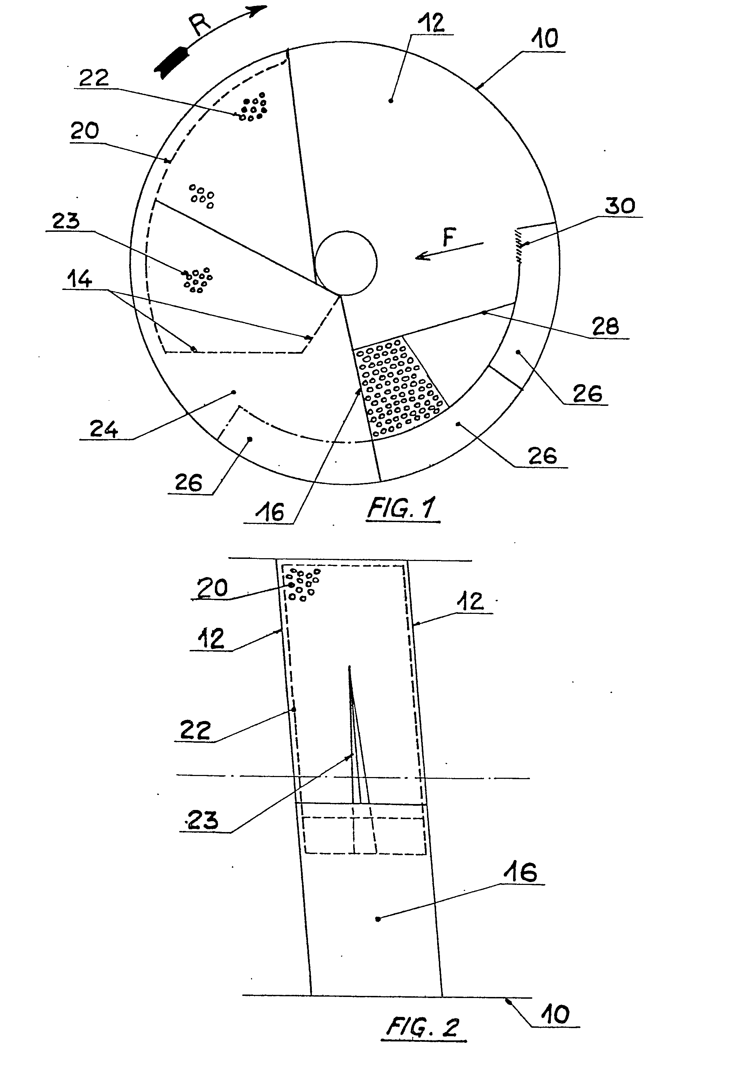

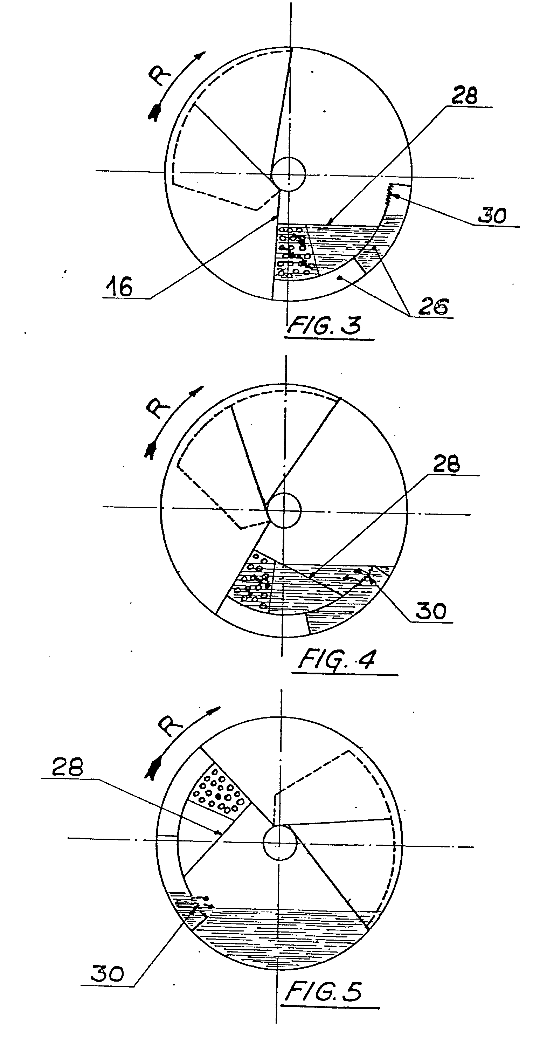

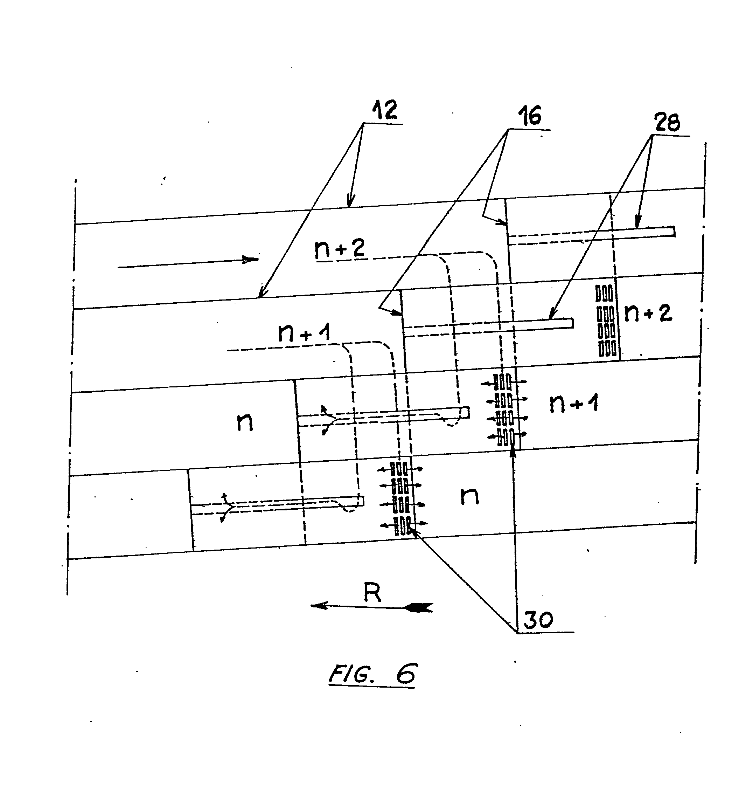

La figure 1 est une vue en coupe transversale d'un appareil conforme à l'invention ; la figure 2 est une vue suivant la flèche F de la figure 1 d'un panier d'égouttage ; les figures 3 à 5 sont des vues analogues à la figure 1 montrant l'écoulement du liquide pour différentes positions du tambour ; et la figure 6 est une vue développée montrant une partie de l'intérieur de l'appareil.

L'appareil représenté sur les dessins est constitué par un tambour cylindrique 10, à paroi pleine, dont l'axe est horizontal ou légèrement incliné sur l'horizontale et dont les extrémités sont fermées par des parois percées d'orifices pour l'entrée et la sortie des matières solides et du liquide. Ce tambour est supporté par des galets ou tout autre moyen connu permettant sa rotation autour de son axe et entraîné par un moyen approprié classique. Le sens de rotation du tambour est indiqué par la flèche R sur les dessins.

Une hélice 12 en tole pleine est disposée à l'intérieur du tambour, sur toute sa longueur ; elle est fixée de manière étanche, par son bord extérieur, à la paroi du tambour et sa hauteur est inférieure au rayon du tambour. Cette hélice délimite un couloir hélicoïdal dans lequel sont placés, à intervalles réguliers, des dispositifs de relevage et d'égouttage des matières solides. Chaque dispositif comporte une grille 14 en deux parties formant entre elles un angle obtus. L'extrémité intérieure de la grille 14 est fixée au bord intérieur d'une cloison pleine 16 qui est fixée de manière étanche à la paroi du tambour et aux spires de l'hélice. Cette cloison est disposée suivant une corde peu distante de l'axe du tambour. L'autre extrémité de la grille 14 est fixée à une extrémité d'une grille courbe 20 disposée le long de la paroi du tambour, à faible distance de celle-ci ; l'autre extrémité de la grille 20 est fixée à la paroi du tambour. Les bords des grilles 14 et 20 sont légèrement espacées des spires de l'hélice 12, et des parois latérales 22 disposées le long des spires sont fixées aux bords des grilles de façon à former avec celles-ci un panier dont toutes les parois sont perforées ; les bords des parois 22 qui ne sont pas fixés aux grilles sont fixés aux spires de l'hélice.

La partie inférieure du panier est divisée en deux moitiés égales par une cloison creuse 23 disposée transversalement à l'axe du tambour, constituée par deux tôles perforées formant un dièdre aigu et dont les bords sont fixés aux grilles 14 et 20, l'intérieur de cette cloison communiquant avec une chambre 24 formée sous les grilles 14 et 20 par la cloison 16, les spires de l'hélice et la paroi du tambour. Cette cloison permet d'augmenter la surface d'égouttage.

Les grilles 14 et les cloisons 16 définissent dans le couloir hélicoïdal une série de compartiments qui sont traversés par les matières solides et le liquide circulant en sens inverse d'une extrémité à l'autre du tambour. Pendant la rotation du tambour, les matières solides contenues dans chaque compartiment sont soulevées par les grilles 14, s'égouttent et se déversent dans le compartiment suivant, par dessus le bord intérieur des cloisons 16. Le liquide provenant de l'égouttage des matières solides est recueilli dans les chambres 24. Chaque chambre 24 communique, par un couloir 26 aménagé le long de la paroi du tambour, avec le compartiment précédent, en considérant le sens de circulation des matières solides. Dans l'exemple de réalisation représenté sur les dessins, le décalage des cloisons 16 est supérieur à 360° de sorte que chaque canal, dont l'entrée est située à l'extrémité aval du compartiment, en considérant le sens de circulation des matières solides, traverse l'extrémité amont du même compartiment avant de pénétrer dans l'extrémité amont du compartiment précédent ; dans ce dernier, le canal s'étend en direction axiale sur toute la largeur du compartiment. Cette disposition est visible sur la figure 6 où le sens de circulation des matières solides est indiqué par une flèche en trait continu, tandis que celui du liquide est indiqué par des flèches en traits discontinus.

Un épi creux 28, constitué par deux tôles formant un dièdre aigu est disposé approximativement dans le plan médian de chaque compartiment, transversalement à l'axe de l'appareil et fixé sur la cloison 16 et la paroi intérieure des couloirs 26 traversant le compartiment et y aboutissant, respectivement. L'intérieur de l'épi communique avec la partie avant, en considérant le sens de rotation du tambour, du couloir 26 aboutissant au compartiment ; la paroi de l'extrémité avant, attenante à la cloison 16 de l'épi est perforée. La paroi intérieure de la partie arrière du couloir est percée d'ouvertures 30 munies de déflecteurs formant des persiennes.

Le liquide amené par les couloirs est donc introduit initialement dans les compartiments à travers les orifices percés dans la partie avant des épis 28 (figure 3) puis simultanément par ces orifices et par les ouvertures 30 (figure 4) et enfin uniquement par ces ouvertures (figure 5).

En fonctionnement, le tambour étant animé d'un mouvement de rotation continu, les matières solides contenues dans un compartiment quelconque n pénètrent dans le panier placé dans ce compartiment puis sont soulevées par la grille 14 et se déversent dans le compartiment suivant n+1 par dessus la cloison 16. Ce déversement est progressif et lorsqu'il débute, le liquide provenant du compartiment n+2 (voir figure 6) commence à s'écouler dans le couloir 26 et pénètre dans le compartiment n+1 par les orifices de la partie perforée de l'épi 28, c'est-à-dire dans la zone où tombent les matières solides qui se répartissent de part et d'autre de l'épi (figure 3).

Du fait de la rotation du tambour le couloir 26 se remplit progressivement de liquide et lorsque les matières solides atteignent le niveau de la partie arrière du couloir celui-ci est complètement plein et le liquide pénètre dans le compartiment à la fois par les orifices de l'épi 28 et par les ouvertures 30 (figure 4). On réalise ainsi une répartition du liquide dans toute la masse des matières solides et on obtient par conséquent un mélange très homogène des matières solides et du liquide. Lorsque la partie perforée de l'épi émerge des matières solides, le liquide ne s'écoule plus que par les ouvertures 30 jusqu'à vidange complète de la chambre 24 du compartiment n+2. Les persiennes formant les ouvertures 30 sont orientées de façon à empêcher les matières solides de pénétrer dans les couloirs 26.

L'appareil de l'invention peut être utilisé pour réaliser des échanges thermiques entre des matières solides et un liquide, par exemple pour réchauffer des cossettes de betteraves, avant leur entrée dans un diffuseur, au moyen du jus sucré sortant du diffuseur, ou pour extraire un composant soluble d'une matière au moyen d'un solvant, par exemple pour extraire le sucre des betteraves à sucre.

Il est bien entendu que toutes les modifications qui peuvent être apportées au mode de réalisation décrit par l'emploi de moyens techniques équivalents entrent dans le cadre de l'invention.

Revendications de brevet

1. Appareil d'échange thermique ou massique entre des matières solides et un liquide constitué par un tambour (10) à axe horizontal ou légèrement incliné comportant intérieurement une hélice (12) fixée à la paroi du tambour et assurant la progression des matières solides, des dispositifs de relevage et d'égouttage divisant le couloir formé par l'hélice en une série de compartiments, chaque dispositif comportant une grille (14) qui, au cours de la rotation du tambour, soulève les matières solides pour permettre leur égouttage puis les laisse retomber dans le compartiment suivant et une cloison pleine (16) située à l'arrière de la grille, en considérant le sens de rotation du tambour, et formant avec les spires de l'hélice et la paroi du tambour une chambre (24) recevant le liquide s'égouttant des matières solides, et des couloirs (26) faisant communiquer chacune de ces chambres avec le compartiment situé en amont, en considérant le sens de progression des matières solides, caractérisé en ce que les dits couloirs (26) sont aménagés le long de la paroi du tambour (10) et chacun d'eux communique avec le compartiment qu'il alimente par des ouvertures (30) percées dans sa partie arrière, en considérant le sens de rotation du tambour, et par des orifices percés dans la partie avant, attenante à la cloison (16) du dispositif de relevage et d'égouttage, d'un épi creux (28) raccordé à la partie avant du couloir (26) et disposé approximativement dans le plan médian, transversal à l'axe du tambour, du compartiment.

2. Appareil selon la revendication 1, caractérisé en ce que les couloirs (26) s'étendent sur toute la largeur axiale du compartiment qu'ils alimentent.

3. Appareil selon la revendication 1 ou 2, caractérisé en ce que la largeur des couloirs (26) mesurée le long de la paroi du tambour est pratiquement égale à la dimension correspondante des chambres (24) auxquelles ils sont raccordés.

4. Appareil selon la revendication 1, 2 ou 3, caractérisé en ce que les dispositifs de relevage et d'égouttage (14, 16) sont décalés d'un angle supérieur à 360° et chaque couloir (26) partant de l'extrémité aval, en considérant le sens de progression des matières solides, d'un compartiment, traverse l'extrémité amont de ce même compartiment et aboutit à l'extrémité amont du compartiment précédent.

5. Appareil selon la revendication 1, 2, 3 ou 4, caractérisé en ce que chaque dispositif de relevage et d'égouttage comporte une grille (14) en deux parties formant entre elles un angle obtus, l'une des parties étant fixée au bord intérieur de la cloison pleine (16) et l'autre partie étant raccordée à une grille courbe (20) disposée le long de la paroi du tambour (10), à faible distance de celle-ci et deux parois latérales (22) perforées disposées le long des spires de l'hélice (12), à faible distance de celles-ci, et dont les bords sont fixés aux dites grilles pour former un panier d'égouttage de grande capacité.

6. Appareil selon la revendication 5, caractérisé en ce que la partie inférieure du panier d'égouttage est divisée en deux par une cloison creuse (23), disposée transversalement à l'axe du tambour (10), dont les parois sont perforées et dont l'intérieur communique avec la chambre de collecte du liquide d'égouttage (24).

*FIG. 1*

*FIG. 2*

R

28

30

16

26

*FIG. 3*

R

28

30

*FIG. 4*

R

28

30

*FIG. 5*

FIG. 6

Office européen des brevets

**RAPPORT DE RECHERCHE EUROPEENNE**

Numéro de la demande

EP 80 40 1336

| Catégorie | Citation du document avec indication, en cas de besoin, des parties pertinentes | Revendication concernee |
|---|---|---|
| A | FR - A - 2 002 508 (RAFFINERIE TIRLEMONTOISE) | |
| A | FR - A - 2 103 665 (RAFFINERIE TIRLEMONTOISE) | |
| A | FR - A - 2 334 395 (RAFFINERIE TIRLEMONTOISE) | |
| A | FR - A - 2 414 938 (GENIE GUY) | |
| A | US - A - 2 569 199 (RAFFINERIE TIRLEMONTOISE) | |
| A | US - A - 3 930 801 (RAFFINERIE TIRLEMONTOISE) | |
| AP | FR - A - 2 431 314 (SOCIETE SU-CRIERE D'ETUDES ET DE CONSEILS, FIVES-CAIL BABCOCK) | |

----

**DOCUMENTS CONSIDERES COMME PERTINENTS**

**CLASSEMENT DE LA DEMANDE (Int. Cl. 3)**

B 01 D 11/02
C 13 D 1/10

**DOMAINES TECHNIQUES RECHERCHES (Int. Cl. 3)**

B 01 D 11/02
C 13 D 1/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 07-01-1981 | DE PAEPE |

OEB Form 1503.1  06.78